## Europäisches Patentamt

## European Patent Office

## Office européen des brevets

(19)

(11) Veröffentlichungsnummer: **0 082 378**

**B1**

(12) # EUROPÄISCHE PATENTSCHRIFT

(45) Veröffentlichungstag der Patentschrift:
23.07.86

(51) Int. Cl.⁴: **F 03 D 1/06**

(21) Anmeldenummer: **82111223.2**

(22) Anmeldetag: **03.12.82**

(54) Vorrichtung zur Energiegewinnung.

(30) Priorität: **17.12.81 NL 8105689**

(43) Veröffentlichungstag der Anmeldung:
**29.06.83 Patentblatt 83/26**

(45) Bekanntmachung des Hinweises auf die Patenterteilung:
**23.07.86 Patentblatt 86/30**

(84) Benannte Vertragsstaaten:
**BE DE FR GB IT SE**

(56) Entgegenhaltungen:
**EP-A-0 025 251**
**US-A-4 093 402**

(73) Patentinhaber: **Stichting Energieonderzoek Centrum Nederland, Scheveningseweg 112, NL-2584 AE 's- Gravenhage (NL)**

(72) Erfinder: **van Holten, Theodoor, Dr., Thorbeckelaan 66, NL- 2641 WC Pijnacker (NL)**

(74) Vertreter: **Bauer, Hubert, Lothringer Strasse 53, D-5100 Aachen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zur Abnahme von Energie aus einem strömenden Medium, z.B. eine Windturbine mit einer um ihre Achse drehbaren Nabe, worauf in im wesentlichen radialer Richtung ausgerichtete Schraubenblätter befestigt sind, wobei jedes der Schraubenblätter an seinem Ende oder in der Nähe seines Endes mit einem Hilfsflügel versehen ist, der - in einer Schnittfläche betrachtet, in der die relative Strömungsrichtung während des Betriebes in der Mittellinie des Schraubenblattes liegt - so angeordnet ist, daß die nach vorn verlängerte, in der betreffenden Fläche gelegene Sehne des Hilfsflügelprofils eine Linie schneidet, die in der betreffenden Fläche liegt und parallel zur relativen Strömungsrichtung verläuft und durch die Achse der Nabe geht.

Eine Vorrichtung dieser Art wird in der US-PS 4,093,402 beschrieben. Durch die Verwendung von Hilfsflügeln an den Ende oder in der Nähe des Endes der Schraubenblätter wird eine stationär ringförmige Wirbelströmung ausgelöst, die den Wirkungsgrad erhöhen kann.

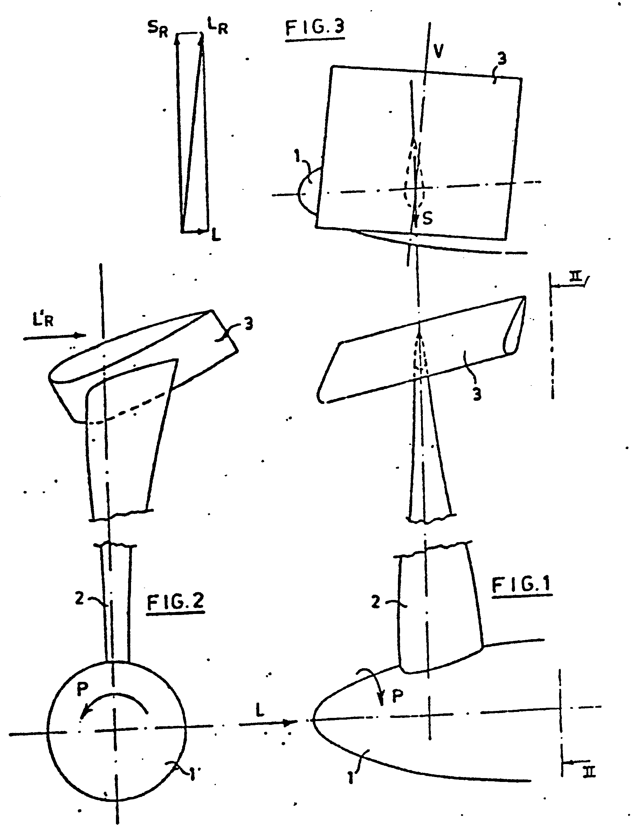

Es hat sich herausgestellt, daß der Wirkungsgrad nicht optimal vergrößert wird, wenn die Hilfsflügel in einfacher Weise - wie im betreffenden Patent in Fig. 2 dargestellt - an den Schraubenblättern befestigt sind. Ein Ablösen der Grenzschicht vom Hilfsflügel tritt bei dieser Anordnung leicht auf und führt bisweilen zu einem ansehnlichen Leistungsverlust. Die angegebene Konfiguration kann. außerdem zu Schwingungsproblemen (Flattern) mit u.a. der Möglichkeit eines Blattbruches aufgrund von Materialermüdung führen.

Ziel der Erfindung ist es, solche Maßnahmen vorzusehen, daß bei einer vorgegebenen, durch die Schraubenblätter bestrichenen Fläche eine optimale Menge Energie aus dem Luftstrom erzielt und weiterhin das Schwingen beseitigt wird.

Dies wird durch eine solche Anordnung der Hilfsflügel in bezug auf das Schraubenblatt erreicht, daß bei Rotation die Unterdruckspitzen des Flügels und des Schraubenblattes um mehr als die 0,3-fache Länge der größten Sehne auseinanderliegen.

Besonders zweckmäßig sind folgende, einander ergänzende Maßnahmen:

a) eine in Rotationsrichtung gesehen nach vorn gerichtete Anordnung des Hilfsflügels in Bezug auf das Schraubenblatt, so daß die Unterdruckspitzen des Flügels und des Schraubenblattes (bei Rotation) um mehr als die 0,3-fache Länge der größten Sehne auseinanderliegen;

b) der Schwerpunkt des Hilfsflügels vor der neutralen des Schraubenblattes liegt;

c) das Schraubenblatt in der Nähe der Nabe so geformt ist, daß sich das Strömungsmedium von der Nabe nicht ablöst.

Vorzugsweise wird der Abstand zwischen der Unterdruckspitze (bei Rotation) in der Größenordnung der 0,5-fachen Länge der größten Sehne gewählt. Meistens wird dieser Abstand die Länge der Sehne des Hilfsflügels sein.

Die Unterdruckspitze des Hilfsflügels befindet sich ungefähr an der Stelle seiner größten Dicke, also bei einem normalen gemäß einem Flugzeugprofil ausgeführten Flügel relativ weit nach vorn. Das ist auch der Fall bei der Unterdruckspitze des Schraubenblastes. Die erfindungsgemäße Anordnung resultiert in einer - vom konstruktiven Gesichtspunkt aus gesehen - nicht naheliegenden Anordnung des Hilfsflügels in bezug auf das Schraubenblatt. Dieser unverhältnismäßig weit nach vorn angeordnete Hilfsflügel kommt auch der zweiten Forderung entgegen, daß Schwingungen vermieden werden, wenn der Schwerpunkt des Hilfsflügels vor der neutralen Achse des Schraubenblattes liegt. Dazu kann es erforderlich sein, den Hilfsflügel stellenweise mit Material eines höheren Gewichts zu versehen.

Ein ganz anderer Effekt, der die Arbeit der Turbine nachteilig beeinflussen kann, ist der Betrag des Kippwinkels des Hilfsflügels. Bei einem falschen Winkel entsteht bei Rotation eine Strömung im Bereich der Fläche, die durch die Hilfsflügel durchlaufen wird, so daß diese wie Propeller arbeiten. Dieser nachteilige Effekt wird vermieden, wenn die Richtung der Längsachse jedes Hilfsflügels d. h. in der Richtung der Spannweite einen Winkel mit der Achse der Nabe zwischen 10° und 40°, vorzugsweise zwischen 25° und 30°, einschließt.

Ein anderer unerwünschter Effekt ist der sogenannte "Saugeffekt" an den Kanten. Dieser entsteht wie folgt: Die Spitzenwirbel, die an den Spitzen oder Kanten (Seitenkanten) der Hilfsflügel auftreten, verursachenhohe Unterdrücke an beiden Kanten (Seitenkanten). Dadurch, daß die Konfiguration der Wirbel an den Flügelspitzen asymmetrisch ist (im Gegensatz zu normalen Flugzeugflügeln), verbleibt eine resultierende Querkraft, die eine der Rotationsrichtung entgegengerichtete Komponente besitzt.

Der "Saugeffekt" kann durch eine bestimmte Ausbildung der Hilfsflügel an der Anströmseite verhindert oder gemindert werden. Diese Kante wird dazu in bezunk auf die Vorderkante rückwärts unter einem Komplementärwinkel zu einem Winkel von 15 bis 45°, vorzugsweise 30 bis 40°, abgeschrägt. Ferner ist es für eine Verbesserung des Wirkungsgrades zweckmäßig, daß diese Kante scharf ist und beide sich dort berührende Flächen einen Winkel einschließen, der sich dem Wert 0° annähert, während in der der Nabe zugewandten unteren Fläche des Hilfsflügels die Längslinien fast gerade sind.

Die Erfindung wird anhand einer Zeichnung beschrieben. Diese zeigt in:

Fig. 1 eine schematische Seitenansicht einer bekannten Vorrichtung, wobei nur ein Schraubenblatt wiedergegeben ist;

Fig. 2 eine Rückansicht dieser Vorrichtung nach der Linie II - II der Fig. 1;

Fig. 3 eine Draufsicht auf die Vorrichtung gemäß Fig. 1 nebst einem Geschwindigkeitsdiagramm;

Fig. 4 eine perspektivische Ansicht eines erfindungsgemäßen Schraubenblattes mit einem Hilfsflügel;

Fig. 5 eine gegenüber Fig. 4 detailliertere Ansicht des erfindungsgemäßen Hilfsflügels mit dem Schraubenblatt. Die wiedergegebene bekannte Vorrichtung umfaßt eine Nabe 1, auf der mindestens zwei Schraubenblätter 2 angeordnet sind, von denen in der Zeichnung nur eines wiedergegeben ist. Wenn ein Luftstrom mit einer Geschwindigkeit L von links, wie in Fig. 1 dargestellt, der Vorrichtung zuströmt, wird die Nabe sich in Richtung des Pfeils P drehen. Wenn die Vorrichtung sich dreht, wird das Ende des Schraubenblattes 2 eine Geschwindigkeit erhalten, deren Betrag in Fig. 3 mit S angegeben ist.

In den Fig. 1 bis 3 ist auf dem Ende des Schraubenblattes 2 ein rechteckförmiger Hilfsflügel 3 befestigt. Infolge der Rotation des Schraubenblattes 2 hat der Hilfsflügel 3 gleichfalls eine Umfangsgeschwindigkeit, die ungefähr gleich S ist. Im Diagramm der Fig. 3 ist die zufolge dieser Rotation auftretende relative Luftgeschwindigtkeit mit $S_R$ angegeben, so daß in bezug auf den Hilfsflügel 3 eine relative Luftgeschwindigkeit $L_R$ entsteht. Da $S_R$ mehrfach größer ist als L, wird auch bei einem sich verändernden Verhältnis $S_R$:L die Richtung von $L_R$ nur wenig variieren. Der Hilfsflügel 3, dessen Vorderkante ungefähr rechtwinklig zur Richtung $L_R$ ist, wird daher fast stets auf dieselbe Weise angeströmt.

Inbesondere aus Fig. 2 ist ersichtlich, daß der Hilfsflügel 3 einen solchen Einfallswinkel in Bezug auf die relative Luftgeschwindigkeit besitzt, daß auf den Hilfsflügel eine Kraft ausgeübt wird, deren Hauptkomponente zur Mittellinie der Nabe 1 gerichtet is. Fig. 2 zeigt nämlich zwar eine Rückansicht von Fig 1; diese Rückansicht bildet jedoch nur einen sehr kleinen Winkel mit einer Ansicht in Längsrichtung des Flügels, also rechtwinklig zu einer in Fig. 3 wiedergegebenen Fläche V, die mit der Richtung der relativen Luftgeschwindigkeit parallel verläuft und durch die Mittellinie des Schraubenblattes 2 geht. Die in Fig. 2 mit $L'_R$ angegebene Komponente der relativen Luftgeschwindigkeitsrichtung bildet daher nur einen sehr kleinen Winkel mit der wirklichen relativen Luftgeschwindigkeitsrichtung.

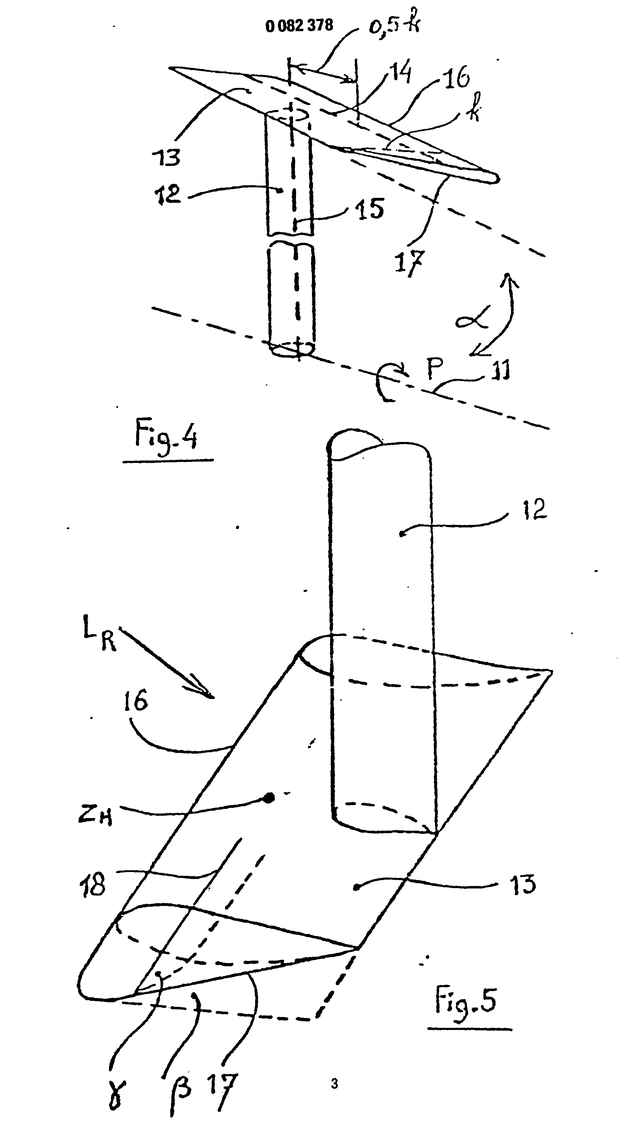

In Fig. 4 werden mit vergleichbaren Bezugszahlen dieselben Teile wiedergegeben wie in den Fig. 1, 2 oder 3. Wesentlich ist nun, daß ein Hilfsflügel 13 in Bezug auf ein Schraubenblatt 12 in Anströmrichtung viel weiter vorn angeordnet ist, und zwar so, daß der Abstand zwischen den Unterdruckspitzen, deren geometrische Orte für den Flügel 13 und das Schraubenblatt 12 mit den punktierten Linien 14 bzw. 15 wiedergegeben sind, einen Wert von ca. 0,5 k aufweist. In diesem Beispiel ist k die Länge der Sehne des Hilfsflügels 13, die größer ist als die des Schraubenblattes 12. In Fig. 4 sieht man auch, daß die Längsachse des Hilfsflügels einen Winkel α ("Kippwinkel") mit der Drehachse 11 einschließt.

Fig. 5 zeigt, daß die Seitenkante 17 anströmseitig unter einen Komplementärwinkel zum Winkel β in bezug auf die Vorderkante 16 abgeschrägt ist und die Flächen, die sich an dieser Kante 17 berühren, einen Winkel γ in bezug aufeinander einschließen, der sich dem Wert 0° annähert, während in der der Nabe zugewandten unteren Fläche die Längslinien 18 fast gerade sind.

Die Hilfsflügel stören das übliche Strömungsbild, wodurch die Anpassung des Dralles der Schraubenblätter zum Erhalt des optimalen Wirkungsgrades erforderlich ist. Das Anbringen von Hilfsflügeln in der erfindungsgemäßen Weise auf Schraubenblätter bestehender Windturbinen führt daher noch nicht automatisch zu einem optimalen Wirkungsgrad.

Es wird bemerkt, daß die gemäß der relativen Strömungsrichtung verlängert gedachten ebenen Flächen benachbarter Hilfsflügel - von der Fläche der Schraubenblätter 12 gesehen - sich schneiden, vorzugsweise teilweise überlappen. Hiermit wird die Form der Hilfsflügel bestimmt.

Die Spannweite der Hilfsflügel muß zumindest eine Länge haben, die durch die Formel:

FIG1/30

bestimmt wird, worin:

b = Spannweite
U = Windgeschwindigkeit
Ω = Winkelgeschwindigkeit de Rotors
R = Radius des Rotors
N = Anzahl der Schraubenblätter.

Wie Fig.5 zeigt, liegt der Schwerpunkt $Z_H$ des Hilfsflügels 13 vor der neutralen Achse der Schraubenblattes 12.

Mit einem Beispiel soll gezeigt werden, daß für einen repräsentativen Windturbinen-Entwurf mit Hilfsflügeln gemäß näher anzugebenden Entwurfsgrößen, bei dem die Ablösung der Grenzschicht vom Hilfsflügel auftritt, dieser keine zusätzliche Leistung erbringen wird.

Der Widerstandskoeffizient des Hilfsflügels wird im Windkanal gemessen. Dieser Widerstandskoeffizient wird definiert als:

FIG2/30

worin:

D Hilfsflügel = Widerstand des Hilfsflügels.
ϑ = Luftdichte.
S Hilfsflügel = projektierte Oberfläche des Hilfsflügels.
Ω = Winkelgeschwindigkeit des Rotors.

R = Radius des Rotors. Die Zunahme von $C_D$ infolge der Ablösung der Grenzschicht kann in der Größenordnung von $\Delta C_D = 0{,}10$ liegen. Falls keine Ablösung erfolgt (also mit einem erfindungsgemäßen Entwurf), ist $\Delta C_D \approx 0$.

Die Übersetzung dieser Tatsache in die Leistung der Windturbine folgt aus der Formel:

$\Delta C_P = \Delta c_D \cdot \sigma \cdot \lambda^3$, worin:

$\Delta C_P$ = Verlust am Leistungskoeffizienten

$\sigma$ = Völligkeitsgrad der Flügel = Gesamtfläche der Hilfsflügel/ Vorderfläche der Schraubenblattscheibe $\pi R^2$

$\lambda$ = Winkelgeschwindigkeitsfaktor $= \Omega R/U$

P = Leistung der Windturbine

U = Windgeschwindigkeit.

$\Delta C_P$ ist daher Null, wenn $\Delta C_D = 0$ ist (keine Ablösung der Grenzschicht).

Der Einfluß der Ablösung ist abhängig von vielen Faktoren. Für einen vorstehend bezweckten repräsentativen Entwurf gelten Werte mit folgender Größenordnung:

$\sigma = 0{,}02$,

$\lambda = 10$,

daher $\Delta C_P = 2$. Bei einer konventionellen Turbine ist $C_P \approx 0{,}45$.

Das letztere bedeutet, daß mit einer Ablösung die Windturbine keine Leistung liefern wird, da $C_p = 0{,}45 - \Delta C_P$ negativ sein wird.

Bei einer Turbine mit Hilfsflügeln ohne Ablösung der Grenzschicht ist $C_P \approx 1{,}0$ bis $1{,}1$, wobei $\Delta C_P = 0$ ist.

Ein zweiter Punkt betrifft die durch die besondere Kantenform des Hilfsflügels 13 erzielte Verbesserung. Die Erhöhung des Widerstandskoeffizienten $\Delta C_D$ mit einer Kantenform, wie sie bisher gebräuchlich ist, beträgt ungefähr $\Delta C_D \approx 0{,}02$ bis $0{,}03$, was bedeutet, daß $\Delta C_P \approx 0{,}4$ bis $0{,}6$ ist. Auch daraus resultiert eine weniger zulässige Wirkungsgradeinbuße.

**Patentansprüche**

1. Vorrichtung zur Abnahme von Energie aus einem strömenden Medium, z.B. eine Windturbine mit einer um ihre Achse drehbaren Nabe (1), worauf in im wesentlichen radialer Richtung ausgerichtete Schraubenblätter (12) befestigt sind, wobei jedes der Schraubenblätter (12) an seinem Ende oder in der Nähe seines Endes mit einem Hilfsflügel (13) versehen ist, der - in einer Schnittfläche betrachtet, in der die relative Strömungsrichtung während des Betriebs in der Mittellinie des Schraubenblattes (12) liegt - so angeordnet ist, daß die nach vorn verlängerte, in der betreffenden Fläche gelegene Sehne des Hilfsflügelprofils eine Linie schneidet, die in der betreffenden Fläche liegt und parallel mit der relativen Strömungsrichtung verläuft und durch die Achse der Nabe (1) geht, dadurch gekennzeichnet, daß der Hilfsflügel (13) in Bezug auf das Schraubenblatt (12) so angeordnet ist, daß bei Rotation die Unterdruckspitzen des Flügels (13) und des Schraubenblattes (12) um mehr als die 0,3-fache Länge der größten Sehne auseinanderliegen.

2. Vorrichtung nach Anspruch 1, dadurch gekennzeichnet, daß:

a) der Hilfsflügel (13) - in Rotationsrichtung gesehen so in Bezug auf das Schraubenblatt (12) nach vorn gerichtet ist, daß die Unterdruckspitzen des Flügels und des Schraubenblattes (bei Rotation) um mehr als die 0,3-fache Länge der größten Sehne auseinanderliegen

b) der Schwerpunkt des Hilfsflügels (13) vor der neutralen Achse des Schraubenblattes (12) liegt;

c) das Schraubenblatt (12) in der Nähe der Nabe (1) so geformt ist, daß sich das Strömungsmedium von der Nabe (1) nicht ablöst.

3. Vorrichtung nach den Ansprüchen 1 und 2, dadurch gekennzeichnet, daß der Abstand zwischen Unterdruckspitzen (bei Rotation) in der Größenordnung der 0,5-fachen Länge der größten Sehne gewählt wird.

4. Vorrichtung nach den Ansprüchen 1 bis 3, dadurch gekennzeichnet, daß die Richtung der Längsachse jedes Hilfsflügels (13) einen Winkel (a) zwischen 10° und 40° mit der Achse (11) der Nabe (1) einschließt. 5. Vorrichtung nach den Ansprüchen 1 bis 4, dadurch gekennzeichnet, daß die Richtung der Längsachse des Hilfsflügels (13) und die Achse (11) der Nabe (1) einen Winkel ($\alpha$) zwischen 25° und 30° einschließen.

6. Vorrichtung nach den Ansprüchen 1 bis 5, dadurch gekennzeichnet, daß die Seitenkante (17) des Hilfsflügels (13) in Strömungsrichtung hinsichtlich der Vorderkante (16) unter einem Komplementärwinkel zum Winkel ($\beta$) von 15° bis 45° rückwärts abgeschrägt ist.

7. Vorrichtung nach den Ansprüchen 1 bis 6, dadurch gekennzeichnet, daß die Seitenkante (17) unter einem Komplementärwinkel zum Winkel ($\beta$) von 30° bis 40° abgeschrägt ist.

8. Vorrichtung nach den Ansprüchen 1 bis 7, dadurch gekennzeichnet, daß die Seitenkante (17) so abgeschrägt ist, daß die Flächen, die sich an dieser Kante (17) berühren, in Bezug zueinander einen Winkel ($\gamma$) einschließen, der sich dem Wert 0° annähert, während in der der Nabe (1) zugewandten Unterfläche des Hilfsflügels (13) die Längslinien (18) fast gerade sind.

9. Vorrichtung nach den Ansprüchen 1 bis 8, dadurch gekennzeichnet, daß verlängert gedachte ebene Flächen benachbarter Hilfsflügel (13) - von der Fläche der Schraubenblätter (12) gesehen - sich schneiden.

**Claims**

1. A device for the removal of energy from a flowing medium, for example a wind turbine with a hub (1) which is rotatable about its axis and to which screw blades (12) aligned in a substantially radial direction are fastened, in which respect each of the screw blades (12) is provided, at its end or in the vicinity of its end, with an auxiliary wing (13) whichconsidered in a plane of section in which the relative flow direction during operation lies in the centre line of the screw blade (12) - is so arranged that the forwardly lengthened chord, situated in the relevant plane, of the auxiliary wing profile intersects a line which lies in the relevant plane and extends parallel with the relative flow direction and passes through the axis of the hub (1), characterised in that the auxiliary wing (13) is so arranged with respect to the screw blade (12) that upon rotation the minimum pressure points of the wing (13) and of the screw blade (12) lie apart by more than 0.3 times the length of the largest chord,

2. A device according to claim 1, characterised in that:

a) the auxiliary wing (13) - considered in the direction of rotation - is so directed forwardly with respect to the screw blade (12) that the minimum pressure points of the wing and of the screw blade (upon rotation) lie apart by more than 0.3 times the length of the largest chord; b) the centre of gravity of the auxiliary wing (13) lies in front of the neutral axis of the screw blade (12);

c) the screw blade (12) is so shaped in the vicinity of the hub (1) that the flow medium does not separate from the hub (1).

3. A device according to claims 1 and 2, characterised in that the distance between minimum pressure points (upon rotation) is selected in the order of magnitude of 0.5 times the length of the largest chord.

4. A device according to claims 1 to 3, characterised in that the direction of the longitudinal axis of each auxiliary wing (13) forms an angle $(\alpha)$ between 10° and 40° with the axis (11) of the hub (1).

5. A device according to claims 1 to 4, characterised in that the direction of the longitudinal axis of the auxiliary wing (13) and the axis (11) of the hub (1) form an angle $(\alpha)$ between 25° and 30°.

6. A device according to claims 1 to 5, characterised in that the side edge (17) of the auxiliary wing (13) in the flow direction is bevelled rearwards with respect to the front edge (16) at a complementary angle to the angle $(\beta)$ of 15° to 45°.

7. A device according to claims 1 to 6, characterised in that the side edge (17) is bevelled at a complementsry angle to the angle $(\beta)$ of 30° to 40°.

8. A device according to claims 1 to 7, characterised in that the side edge (17) is so bevelled that the surfaces which are tangent at this edge (17) form an angle $(\alpha)$ with respect to one another which approximates to the value 0°, whilst in the lower surface, turned to the hub (1), of the auxiliary wing (13) the longitudinal lines (18) are almost straight.

9. A device according to claims 1 to 8, characterised in that imaginary lengthened flat surfaces of neighbouring auxiliary wings (13) - considered from the surface of the screw blades (12) - intersect one another.

**Revendications**

1.- Dispositif destiné à extraire de l'énergie d'un milieu en écoulement, par exemple une turbine éolienne comportant un moyeu (1) pouvant tourner autour de son axe, sur lequel sont fixées des pales d'hélice (12) orientées dans une direction essentiellement radiale, chaque pale d'hélice (12) étant pourvue à son extrémité ou au voisinage de celle-ci, d'une ailette auxiliaire (13) qui - vu dans une surface de coupe dans laquelle la direction d'écoulement relative pendant le fonctionnement se situe sur l'axe central de la pale d'hélice (12) - est disposée d'une manière telle que la corde du profil de l'ailette auxiliaire prolongée vers l'avant et disposée dans la surface en question coupe une ligne qui se trouve dans la surface en question, s'étend parallèlement à la direction d'écoulement relative et passe par l'axe du moyeu (1), caractérisé en ce que l'ailette auxiliaire (13) est disposée par rapport à la pale d'hélice (12) d'une manière telle que, lors de la rotation, les pointes de dépression de l'aile (13) et de la pale d'hélice (12) soient espacées l'une de l'autre d'une distance supérieure à 0,3 fois la longueur de la plus grande corde.

2.- Dispositif suivant la revendication 1, caractérisé en ce que:

a) l'ailette auxiliaire (13), vu dans le sens de rotation, est orientée vers l'avant par rapport à la pale d'hélice (12), d'une manière telle que les pointes de dépression de l'aile et de la pale d'hélice (lors de la rotation) soient espacées l'une de l'autre de plus de 0,3 fois la longueur de la plus grande corde,

b) le centre de gravité de l'ailette auxiliaire (13) est disposé devant l'axe neutre de la pale d'hélice (12),

c) la pale d'hélice (12) est façonnée au voisinage du moyeu (1) d'une manière telle que le milieu en écoulement ne décolle pas du moyeu (1).

3. -Dispositif suivant les revendications 1 et 2, caractérisé en ce que la distance entre les pointes de dépression (lors de la rotation) est choisie dans un ordre de grandeur ègal à 0,5 fois la longueur de la plus grande corde.

4. -Dispositif suivant les revendications 1 à3, caractérisé en ce que la direction de l'axe longitudinal de chaque ailette auxiliaire (13) forme un angle $(\alpha)$ compris entre 10 et 40° avec l'axe (11) du moyeu (1).

5.-Dispositif suivant les revendications 1 à 4, caractérisé en ce que la direction de l'axe longitudinal de l'ailette auxiliaire (13) et l'axe (11) du moyeu (1) forment un angle inclus $(\alpha)$ compris entre 25 et 30°.

6.-Dispositif suivant les revendications 1 à 5, caractérisé en ce que le bord latéral (17) de l'ailette auxiliaire (13) est chanfreiné dans le sens de l'écoulement, par rapport au bord antérieur (16), vers l'arrière sous un angle complémentaire à l'angle $(\beta)$ de 15 à 45°.

7.-Dispositif suivant les revendications 1 à 6, caractérisé en ce que le bord latéral (17) est chanfreiné sous un angle complémentaire à l'angle (β) de 30 à 40°.

8.-Dispositif suivant les revendications 1 à 7, caractérisé en ce que le bord latéral (17) est chanfreiné d'une manière telle que les surfaces qui se touchent au niveau de ce bord (17) forment l'une avec l'autre un angle (γ) qui s'approche de la valeur de 0°, tandis que dans surface de l'ailette auxiliaire (13) tournée vers le moyeu (1), les lignes longitudinales (18) sont presque des lignes droites.

9.-Dispositif suivant les revendications 1 à 8, caractérisé en ce que des surfaces planes d'ailettes auxiliaires (13) voisines imaginées prolongés, vu à partir de la surface des pales d'hélice (12), se coupent.

0 082 378

FIG.3

FIG.2

FIG.1

0 082 378

0,5 $k$

13 12 14 16 $k$ 15 17 $\alpha$ P 11

Fig.4

$L_R$ 12 16 $Z_H$ 18 13 $\gamma$ $\beta$ 17

3

Fig.5